(19) **Europäisches Patentamt / European Patent Office / Office européen des brevets**

(11) **EP 4 194 287 A1**

(12) **EUROPEAN PATENT APPLICATION**
published in accordance with Art. 153(4) EPC

(43) Date of publication:
**14.06.2023 Bulletin 2023/24**

(21) Application number: **20949391.5**

(22) Date of filing: **06.11.2020**

(51) International Patent Classification (IPC):
**B60T 8/17** *(2006.01)*    **B61H 11/00** *(2006.01)*

(86) International application number:
**PCT/CN2020/126915**

(87) International publication number:
**WO 2022/032897** (17.02.2022 Gazette 2022/07)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2020  CN 202010797634**

(71) Applicant: **CRRC TANGSHAN CO., LTD.**
**Fengrun District**
**Tangshan**
**Hebei 063035 (CN)**

(72) Inventors:
- **LIU, Zhonghua**
  **Tangshan, Hebei 063035 (CN)**
- **CHEN, Lei**
  **Tangshan, Hebei 063035 (CN)**
- **TANG, Liguo**
  **Tangshan, Hebei 063035 (CN)**

- **SUN, Huizhi**
  **Tangshan, Hebei 063035 (CN)**
- **JIAO, Dongming**
  **Tangshan, Hebei 063035 (CN)**
- **YAN, Xiaogeng**
  **Tangshan, Hebei 063035 (CN)**
- **LUO, Tiejun**
  **Tangshan, Hebei 063035 (CN)**
- **WEI, Runlong**
  **Tangshan, Hebei 063035 (CN)**
- **SHEN, Yuntong**
  **Tangshan, Hebei 063035 (CN)**
- **BAI, Chunxin**
  **Tangshan, Hebei 063035 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **BRAKING FORCE DISTRIBUTION METHOD, DEVICE, AND SYSTEM FOR URBAN RAIL TRAIN**

(57)    The embodiment of the present disclosure provides a braking force allocating method, a device and a system for a metro train. The braking force allocating method includes the following steps of: acquiring a total braking force target of a train and the total electric braking capacity provided by all motor cars of the train, wherein the total braking force target is calculated by a train braking system, and the total electric braking capacity is calculated by a train traction system; and in case where the total electric braking capacity is less than the total braking force target, allocating the total electric braking capacity to all motor cars by the train braking system, and evenly allocating a primary air braking force to the intermediate car by the train braking system, wherein the primary air braking force is equal to a difference between the total braking force target and the total electric braking capacity. The embodiment of the present disclosure solves the technical problem that the metro train has a high probability of coasting.

FIG. 1

**Description**

FIELD OF THE INVENTION

The present disclosure relates to the technical field of metro trains, and more particularly to a braking force allocating method, device and system for a metro train.

BACKGROUND OF THE INVENTION

Adhesion state is the state of the train in actual operation. When the train is braking, the wheel rolls on the rail and the contact portion between the car and the rail is an oval small area due to the gravity of the car. At this time, the wheel-rail contact portion is neither static nor sliding, but a state of "micro-moving in static" or "micro-sliding in rolling", which is called "adhesion" in railway terminology. The phenomenon of keeping the contact portion between moving wheel and rail relatively stationary due to positive pressure is called "adhesion". Static friction in an adhesion state is also called adhesion force. The braking of the train is realized by the adhesion force on the adhesion point between the adhesion wheel and the rail, which is called adhesion braking. When the train adopts adhesion braking, the maximum braking force that can be obtained will not be greater than the adhesion force.

Coasting state is a state of the train that tries its best to avoid. The wheel coasts on the rail. After the train begins to be coasting, the wheel is locked by the brake before the train stops and keeps coasting on the rail. Because the dynamic friction coefficient is much smaller than the static friction coefficient, once this condition occurs, the braking force will be greatly reduced and the braking distance will be prolonged. At the same time, the wheel coasts on the rail for a long distance, which will lead to the scratch of the wheel tread. Therefore, it is an accident state that must be eliminated.

Therefore, the probability of metro train coasting is high, which is an urgent technical problem to be solved by the person skilled in the art.

The above information disclosed in the background art is only for the enhancement of understanding of the background of the present disclosure, and therefore may contain information that does not form the prior art known to person skilled in the art.

SUMMARY OF THE INVENTION

The embodiment of the present disclosure provides a braking force allocating method, device and system for a metro train, so as to solve the technical problem that the metro train has a high probability of coasting.

The embodiment of the present disclosure provides a braking force allocating method for a metro train, which includes the following steps:

acquiring a total braking force target of a train and the total electric braking capacity provided by all motor cars of the train, wherein the total braking force target is calculated by a train braking system, and the total electric braking capacity is calculated by a train traction system;

in a case where the total electric braking capacity is less than the total braking force target, allocating the total electric braking capacity to all motor cars by the train braking system, and evenly allocating a primary air braking force to the intermediate car by the train braking system, wherein the primary air braking force is equal to a difference between the total braking force target and the total electric braking capacity.

The embodiment of the present disclosure also provides the following technical proposal:
A braking force allocating device for a metro train includes:

an acquiring module, configured to acquire a total braking force target of a train and the total electric braking capacity provided by all motor cars of the train, wherein the total braking force target is calculated by a train braking system, and the total electric braking capacity is calculated by a train traction system;

a primary air braking force allocating module configured to, in a case where the total electric braking capacity is less than the total braking force target, allocate the total electric braking capacity to all motor cars by the train braking system, and evenly allocate a primary air braking force to the intermediate car by the train braking system, wherein the primary air braking force is equal to a difference between the total braking force target and the total electric braking capacity.

The embodiment of the present disclosure also provides the following technical proposal:
A braking force allocating system for a metro train includes:

one or more processors;
a storage device for storing one or more programs;
in a case where the one or more programs are executed by the one or more processors, the one or more processors implement the braking force allocating method as above.

By adopting the technical proposal, the embodiment of the present disclosure has the following technical effects: With the adhesion coefficient of the intermediate car of the metro train larger than the adhesion coefficient of the head car, the intermediate car is less likely to be coasting than the head car. In a case where the total electric braking capacity is less than the total braking force target, the train traction system allocates the total electric braking capacity to all the motor cars, and the train braking system evenly allocates the primary air braking force to the intermediate car. Because the adhesion coefficient of the intermediate car is larger than that of the head car, in a case where the head car and the tail car are trailers, with the braking force allocating method for the metro train according to the embodiment of the present disclosure, neither the electric braking force nor the air braking force is applied to the head car which is easy to be coasting, and the electric braking force and the air braking force are applied to the intermediate car which is not easy to be coasting, thereby reducing the probability of coasting of the metro train and achieving the purpose of preventing coasting. In a case where the head car and the tail car are motor cars, with the braking force allocating method for the metro train according to the embodiment of the present disclosure, only the electric braking force is applied to the head car which is easy to be coasting but not to air braking force, and the electric braking force and/or the air braking force is applied to the intermediate car which is not easy to be coasting, thereby reducing the probability of coasting of the metro train and achieving the purpose of preventing coasting. The braking force allocating method for the metro train in the embodiment of the present disclosure reduces the probability of the metro train coasting and achieves the purpose of preventing coasting.

BRIEF DESCRIPTION OF THE DRAWINGS

The drawings illustrated herein serve to provide a further understanding of and constitute a part of this present disclosure, and the illustrative embodiments of this present disclosure and the description thereof are used to explain this present disclosure and are not unduly limiting. In the drawings:

FIG. 1 is a flow chart of braking force allocation of a braking force allocating method for the metro train according to the embodiment of the present disclosure.
FIG. 2 is a flow chart of anti-coasting of the head car having air braking coasting according to the braking force allocating method for the metro train according to the embodiment of the present disclosure, in a case where the head car and the tail car are trailers.
FIG. 3 is a schematic diagram showing that the braking force allocating method for the metro train according to the embodiment of the present disclosure is adapted to the metro train where the head car and the tail car are trailers.

DETAILED DESCRIPTION OF THE EMBODIMENTS

In order to make the technical aspects and advantages of the embodiments of the present disclosure more clear, the following further detailed description of the exemplary embodiments of the present disclosure is given in conjunction with the accompanying drawings, and it is apparent that the described embodiments are only a part of the embodiments of the present disclosure, and are not exhaustive of all embodiments. It should be noted that the embodiments in the present disclosure and the features in the embodiments can be combined with each other without conflict.

Embodiment 1

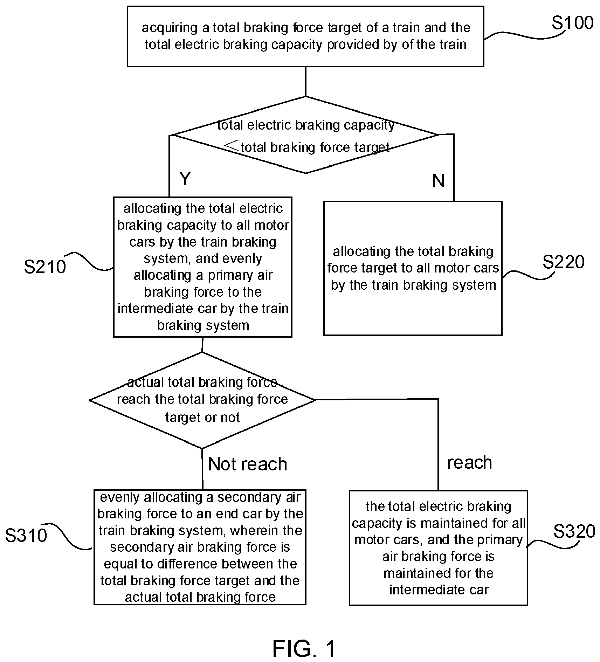

FIG. 1 is a flow chart of braking force allocation of a braking force allocating method for the metro train according to the embodiment of the present disclosure. With reference to FIG. 1, a braking force allocating method for the metro train according to the embodiment of the present disclosure includes the following steps:
Step S100: acquiring a total braking force target of a train and the total electric braking capacity provided by all motor cars of the train, wherein the total braking force target is calculated by a train braking system, and the total electric braking capacity is calculated by a train traction system.
The train traction system feeds back the total electric braking capacity to the train braking system through a train network system.
The train braking system compares the total electric braking capacity with the total braking force target, after comparison, resulting in two situations:

Step S210: In the first case, in a case where the total electric braking capacity is less than the total braking force target, allocating the total electric braking capacity to all motor cars by the train braking system, and evenly allocating a primary air braking force to the intermediate car by the train braking system, wherein the primary air braking force is equal to a difference between the total braking force target and the total electric braking capacity.

Step S220: In the second case, in a case where the total electric braking capacity is greater than or equal to the total braking force target, allocating the total braking force target to all the motor cars by the train braking system, and all the motor cars brake according to the total braking force target without air braking for the supplement. That is to say, at this time, all motor cars can provide enough electric braking force to achieve the goal of total braking force, and all motor cars can realize braking.

That is to say, the total electric braking capacity provided by all motor cars can not reach the total braking force target, so the air braking force is needed to supplement. The way of supplement is to evenly allocate (assign/distribute) the primary air braking force to each intermediate car.

The braking force allocating method for the metro train in the embodiment of the present disclosure utilizes that the adhesion coefficient of the intermediate car of the metro train is greater than the adhesion coefficient of the head car, that is, the intermediate car is less likely to be coasting than the head car. In a case where the total electric braking capacity is less than the total braking force target, the train traction system allocates the total electric braking capacity to all the motor cars, and the train braking system evenly allocates the primary air braking force to the intermediate car. Because the adhesion coefficient of the intermediate car is larger than that of the head car, in a case where the head car and the tail car are trailers, with the braking force allocating method for the metro train according to the embodiment of the present disclosure, neither the electric braking force nor the air braking force is applied to the head car which is easy to be coasting, and the electric braking force and the air braking force are applied to the intermediate car which is not easy to be coasting, thereby reducing the probability of coasting of the metro train and achieving the purpose of preventing coasting. In a case where the head car and the tail car are motor cars, with the braking force allocating method for the metro train according to the embodiment of the present disclosure, only the electric braking force is applied to the head car which is easy to be coasting but not to air braking force, and the electric braking force and/or the air braking force is applied to the intermediate car which is not easy to be coasting, thereby reducing the probability of coasting of the metro train and achieving the purpose of preventing coasting. The braking force allocating method for the metro train in the embodiment of the present disclosure reduces the probability of the metro train coasting and achieves the purpose of preventing coasting.

At this time, the metro train allocates the total electric braking capacity for all motor cars and the primary air braking force for the intermediate car evenly, and brakes as the braking go on. With reference to FIG. 1, the braking force allocating method further includes the following steps:

comparing the actual total braking force of the train with the total braking force target, there will be two situations after comparison:

Step S310: in a case where an actual total braking force of the train does not reach the total braking force target of the train, evenly allocating a secondary air braking force to an end car by the train braking system, wherein the secondary air braking force is equal to the difference between the total braking force target and the actual total braking force.

In this way, in a case where the intermediate car perform air braking and supplementary air braking in such a way that the primary air braking force is evenly allocated to each intermediate car, the actual total braking force of the train cannot reach the total braking force target of the train, and the secondary air braking force is continuously evenly allocated to the end cars, and the end cars continue to supplement air braking. That is to say, the air braking is supplemented by the intermediate car first, and in a case where the supplementary air braking of the intermediate car still cannot reach the total braking force target of the train, the end car carries out further supplementary air braking. The probability of metro train coasting is reduced, and the purpose of preventing coasting is achieved.

Step S320: in a case where the actual total braking force of the train is equal to the total braking force target of the train, the total electric braking capacity is maintained for all the motor cars, and the primary air braking force is maintained for the intermediate car.

At this time, the head car and the tail car do not need to supplement air braking.

As described above, the braking force allocating method for the metro train according to the embodiment of the present disclosure is a braking force allocating method for reducing the probability of the metro train coasting. That is, the braking force allocating method with the function of preventing coasting can avoid coasting as much as possible.

The following is the braking force allocating method for the metro train according to the embodiment of the present disclosure, which is a method for eliminating the coasting in a case where the coasting is detected. The method can not only eliminate the coasting, but also realize that the actual total braking force of the train reaches the total braking force target of the train, thereby ensuring the braking distance of the train. The braking force allocating method for the metro train according to the embodiment of the present disclosure includes further the following steps:

in a case where the coasting car of the metro train is detected, the braking force of the coasting car is reduced to eliminate coasting, and other cars allocate the braking force according to the predetermined braking force allocation rule during coasting, so as to keep the actual total braking force of the train reaching the total braking force target of the train.

in a case where the coasting car of the metro train is detected, firstly, it is necessary to reduce the braking force of the coasting car to eliminate coasting, that is, to eliminate coasting at the first time. After that, other cars allocate braking force according to the predetermined coasting braking force allocation rule. In the predetermined coasting braking force allocation rule, it is necessary to keep the actual total braking force of the train reaching the total braking force target of the train. In this way, the braking distance of the train can be guaranteed.

Specifically, in a case where the metro train is normal, the train network system will transmit the braking instruction to the train traction system and the train braking system respectively after receiving the braking instruction of the braking handle. The systems converts into braking deceleration a according to braking instructions, and the train traction system calculates the total electric braking capacity that all motor cars can provide. The train braking system calculates the total braking force target of the train according to the deceleration a and the current car weight.

Specifically, the train traction system feeds back the actual electric braking force to the braking system through the network system.

During coasting, because of the relative friction between wheels and rails, the bad environment of rails is changed correspondingly, so that the adhesion coefficient of the wheel-rail increases correspondingly. Generally speaking, in the process of operation, the wheel-rail adhesion coefficient of the head car in the forward direction is the worst, while the adhesion coefficient of the intermediate car is relatively good due to the improvement of the wheel-rail friction of the head car. The braking force allocating method for the metro train in the embodiment of the present disclosure utilizes that the adhesion coefficient of the intermediate car of the metro train is greater than the adhesion coefficient of the head car, that is, the intermediate car is less likely to be coasting than the head car.

In the process of detecting coasting, the train traction system generally detects coasting earlier than the train braking system.

Embodiment 2

The braking force allocating method for the metro train in the embodiment of the present disclosure is based on the first embodiment of the present disclosure.

The embodiment of the present disclosure relates to a braking force allocating method in a case where the head car and the tail car of the metro train are trailers.

In the implementation, in a case where the head car and the tail car are trailers, and the total electric braking capacity is less than the total braking force target, during allocating the total electric braking capacity to all the motor cars and evenly allocating the primary air braking force to the intermediate car, the actual braking force of the train is provided by the intermediate car, and the head car and the tail car do not provide the actual braking force.

In a case where the actual total braking force of the train does not reach the total braking force target of the train, evenly allocating the secondary air braking force to the end car, specifically, includes:

in a case where $\lambda_{intermediate\ actual}$ increasing to $\lambda_{max}$, acquiring $N_{intermediate\ total\ adhesion\ max}$, wherein $N_{intermediate\ total\ adhesion\ max}$ is the maximum value of the actual total adhesion of the intermediate car while $\lambda_{intermediate\ actual}$ is equal to $\lambda_{max}$, wherein $\lambda_{intermediate\ actual}$ is the actual adhesion coefficient of the intermediate car, $\lambda_{max}$ is the predetermined maximum adhesion coefficient, and the actual total braking force of the train is equal to $N_{intermediate\ total\ adhesion\ max}$;

in a case where $N_{intermediate\ total\ adhesion\ max} < Z_{total\ braking\ force\ target}$, evenly allocating the secondary air braking force $K_{secondary}$ to the head car and the tail car, wherein $K_{secondary} = Z_{total\ braking\ force\ target} - N_{intermediate\ total\ adhesion\ max}$, and $Z_{total\ braking\ force\ target}$ is the total braking force target of the train.

Above, for the case that the head car and the tail car of a metro train are trailers, the braking force allocating method reduces the probability of the metro train coasting and plays the purpose of preventing coasting.

Next, the braking force allocating method allocates the braking force after coasting in a case where the head car and the tail car of the metro train are trailers.

As the head car and the tail car are trailers, and the head car and the tail car do not supplement air braking force, at this time, the head car and the tail car do not apply electric braking force or air braking force, and the head car will not be coasting.

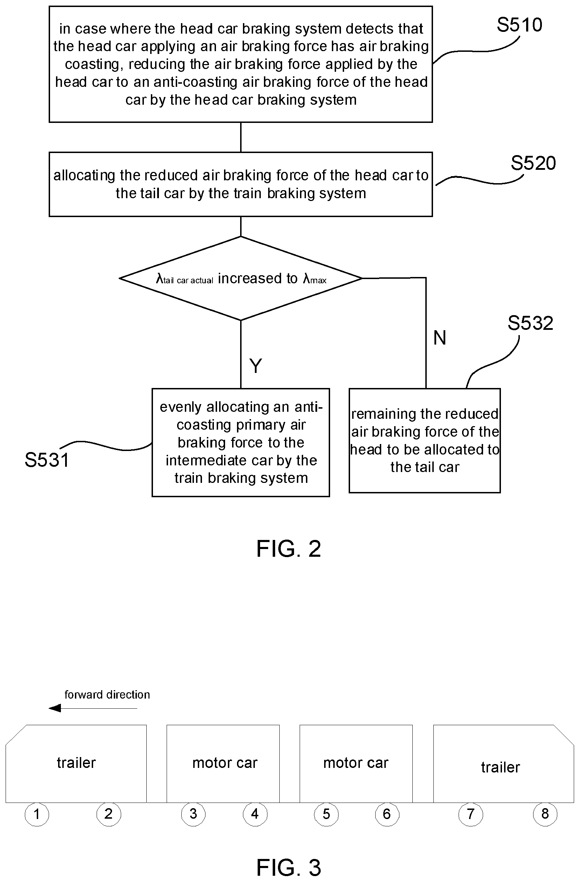

FIG. 2 is a flow chart of anti-coasting of the head car having air braking coasting according to the braking force allocating method for the metro train according to the embodiment of the present disclosure, in a case where the head car and the tail car are trailers. FIG. 3 is a schematic diagram showing that the braking force allocating method for the metro train according to the embodiment of the present disclosure is adapted to the metro train where the head car and the tail car are trailers. In a case where the head car and the tail car are trailers and the head car and the tail car supplement air braking force, at this time, the head car only applies air braking force. In a case where a car of a metro train is detected to be coasting, the braking force of the coasting car is reduced to eliminate coasting, and other cars allocate braking force according to a predetermined coasting braking force allocation rule, so as to keep the actual total braking force of the train reaching the total braking force target of the train. Specifically, the steps include:

Step S510: in a case where the head car braking system detects that the head car applying an air braking force has air braking coasting, reducing the air braking force applied by the head car to an anti-coasting air braking force of the head car $K_{head\ car\ anti\text{-}coasting}$ by the head car braking system; wherein $K_{head\ car\ anti\text{-}coasting} = \lambda_{anti\text{-}coasting} \times M_{head\ car} \times g$, $\lambda_{anti\text{-}coasting}$ is the predetermined adhesion anti-coasting value of the train, $M_{head\ car}$ is the mass of the head car, and $g$ is the acceleration of gravity;

Step S520: allocating the reduced air braking force of the head car $F_{head\ car\ reduced}$ to the tail car by the train braking system, wherein $F_{head\ car\ reduced} = \dfrac{K_{secondary}}{2} - K_{head\ car\ anti-coasting}$ .

$\lambda_{anti\text{-}coasting}$ is the predetermined adhesion anti-coasting value of the train. The value is predetermined to be smaller to ensure that the head car can stop coasting with the predetermined adhesion anti-coasting value of the train. In this way, the reduced air braking force of the head car $F_{head\ car\ reduced}$ is supplemented to the tail car. In this way, the air braking force of the coasting head car is reduced to the extent that coasting can be eliminated. As an improvement, the braking force allocating method of the embodiment of the present disclosure supplements the reduced air braking force of the head car $F_{head\ car\ reduced}$ to the tail car, which has the advantage of keeping the actual total braking force of the train to reach the total braking force target of the train and ensuring the braking distance.

In the implementation, after the step of allocating the reduced air braking force of the head car $F_{head\ car\ reduced}$ to the tail car by the train braking system, further comprising the steps of:

Step S531: in a case where $\lambda_{tail\ car\ actual}$ increased to $\lambda_{max}$ , acquiring $N_{tail\ car\ adhesion\ max}$, wherein $N_{tail\ car\ adhesion\ max}$ is a maximum value of an actual total adhesion force applied by the tail car while $\lambda_{tail\ car\ actual}$ is equal to $\lambda_{max}$, $\lambda_{tail\ car\ actual}$ is an actual adhesion coefficient of the tail car, $F_{tail\ car\ adhesion\ max} = \lambda_{adhesion\ max} \times M_{head\ car} \times g$; evenly allocating an anti-coasting primary air braking force $K_{anti\text{-}coasting\ primary}$ to the intermediate car by the train braking system, wherein $K_{anti\text{-}coasting\ primary} = Z_{total\ braking\ force\ target} - D_{total\ electric\ braking\ capacity} - K_{head\ car\ anti\text{-}coasting\ air\ braking\ force} - N_{tail\ car\ adhesion\ max}$.

In this way, the actual total braking force of the train is kept to reach the total braking force target of the train. In this way, the braking distance of the train can be guaranteed.

Step S532: in a case where $\lambda_{tail\ car\ actual}$ increases and is always less than $\lambda_{max}$, the reduced air braking force of the head car can be allocated to the tail car.

In the implementation, in a case where the head car and the tail car are trailers, the method also includes following steps:

in a case where a traction system of the intermediate car detects an electric braking coasting of the intermediate motor car, calculating an electric braking force of the coasting intermediate motor car $H_{coasting\ intermediate\ motor\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ motor\ car}$ is the mass of the coasting motor car; specifically, in a case where the traction system of the intermediate car detects an electric braking coasting of the intermediate motor car, feedbacking to the train network system; according to the current deceleration a by the train network system, calculating the adhesion coefficient demand $\lambda_{intermediate\ coasting} = \alpha/g$ , then calculating $H_{coasting\ intermediate\ motor\ car} = \lambda_{intermediate\ coasting} \times M_{coasting\ intermediate\ motor\ car} \times g$ and allocating the electric braking force respectively to the train traction system and the train braking system, wherein the current deceleration a is calculated according to the braking instruction by the train network system.

allocating the electric braking force valued at $H_{coasting\ intermediate\ motor\ car}$ to each motor cars by the train traction system, and allocating the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ motor\ car}$, so that the adhesion demand of all cars are same.

In a case where the intermediate motor car occurs coasting, the electric braking force $H_{coasting\ intermediate\ motor\ car}$ allocated for the intermediate motor car is matched with the adhesion coefficient demand of the coasting intermediate motor car, so that the adhesion demand of all cars are same.

In the implementation, the braking force allocating method further includes the following steps:

in a case where during the head car applying the air braking force having coasting and allocating the braking force according to the corresponding steps, the coasting intermediate motor car is detected, allocating the braking force according to the corresponding steps of the head car applying the air braking force having coasting;
in a case where during the intermediate motor car having coasting and allocating the braking force according to the corresponding steps, the head car applying the air braking force having coasting is detected, firstly allocating the braking force according to the corresponding steps of the intermediate motor car having coasting, and then allocating the braking force according to the corresponding steps of the head car applying the air braking force having coasting.

That is to say, the priority of the corresponding step is higher in a case where the head car applying air braking force is coasting.

Embodiment 3

The braking force allocating method for the metro train in the embodiment of the present disclosure is based on the first embodiment of the present disclosure.

The embodiment of the present disclosure is a braking force allocating method in a case where the head car and the tail car of the metro train are motor cars. After the steps of the braking force allocating method for the first embodiment of the present disclosure, the braking force of the metro train is jointly provided by the head car, the tail car and the intermediate car.

The braking force allocating method for the metro train in the embodiment of the present disclosure is based on the first embodiment of the present disclosure.

According to the embodiment of the present disclosure, in a case where the head car and the tail car of the metro train are motor cars, in a case where the total electric braking capacity is less than the total braking force target, after the steps of allocating the total electric braking capacity to all the motor cars and allocating the primary air braking force evenly to the intermediate car, the braking force of the metro train is all jointly provided by the head car, the tail car and the intermediate car.

In the implementation, in a case where the head car and the tail car are motor cars, and the actual total braking force of the train does not reach the total braking force target of the train, evenly allocating the secondary air braking force to the end car, specifically, includes:

in a case where $\lambda_{intermediate\ actual}$ increased to $\lambda_{max}$, acquiring $T_{end\ car\ actual\ electric\ braking} + N_{intermediate\ adhesion\ max}$, wherein $\lambda_{intermediate\ actual}$ is an actual adhesion coefficient of the intermediate car, $\lambda_{max}$ is the predetermined maximum adhesion coefficient, $T_{end\ car\ actual\ electric\ braking}$ is the actual electric braking force applied by the end car and $N_{intermediate\ adhesion\ max}$ is the maximum actual total adhesion force applied by the intermediate car in a case where $\lambda_{intermediate\ actual}$ is equal to $\lambda_{max}$;
in a case where $T_{end\ car\ actual\ electric\ braking} + N_{intermediate\ adhesion\ max} < Z_{total\ braking\ force\ target}$, evenly allocating the secondary air braking force $K_{secondary}$ to the head car and the tail car, wherein $K_{secondary} = Z_{total\ braking\ force\ target} - N_{intermediate\ adhesion\ max} - T_{end\ car\ actual\ electric\ braking}$.

As the sum of the actual electric braking force applied by the end car and the maximum actual total adhesion force applied by the intermediate car is still less than $Z_{total\ braking\ force\ target}$, that is, in a case where the actual electric braking force applied by the end car and the actual total braking force applied by the intermediate car cannot reach the braking target $Z_{total\ braking\ force\ target}$, the head car and the tail car continue to supplement the air braking force by evenly allocating the secondary air braking force $K_{secondary}$ to the head car and the tail car.

Specifically, $\lambda_{max}$ is the predetermined maximum adhesion coefficient of the train, in a case where $\lambda_{intermediate\ actual}$ exceeds $\lambda_{max}$, it is considered to have the risk of coasting.

In the implementation, in a case where the head car and the tail car are motor cars, and the coasting car of the metro trains is detected, reducing the braking force of the coasting car to eliminate coasting, and allocating the braking force to other cars according to the predetermined braking force allocation rule during coasting, so as to keep the actual total braking force of the train reaching the total braking force target of the train, specifically, the step includes:

in a case where the head car traction system detects an electric braking coasting of the head car, reducing the electric braking force of the head car to an anti-coasting braking force of the head car $K_{head\ car\ anti\text{-}coasting}$ by the head car traction system; wherein $K_{head\ car\ anti\text{-}coasting} = \lambda_{anti\text{-}coasting} \times M_{head\ car} \times g$, $\lambda_{anti\text{-}coasting}$ is the predetermined adhesion anti-coasting value of the train, $M_{head\ car}$ is the mass of the head car, and $g$ is the acceleration of gravity; allocating the reduced air braking force of the head car $F_{head\ car\ reduced}$ to the tail car by the train braking system, wherein $F_{head\ car\ reduced} = T_{end\ car\ actual\ electric\ braking} + \dfrac{\frac{K_{secondary}}{2} - K_{head\ car\ anti-coasting}}{}$ .

$\lambda_{anti\text{-}coasting}$ is the predetermined adhesion anti-coasting value of the train. The value is predetermined to be smaller to ensure that the head car can stop coasting with the predetermined adhesion anti-coasting value of the train. In this way, the reduced air braking force of the head car $F_{head\ car\ reduced}$ is supplemented to the tail car. In this way, the braking force of the coasting head car is reduced to the extent that coasting can be eliminated. As an improvement, the braking force allocating method of the embodiment of the present disclosure supplements the reduced air braking force of the head car $F_{head\ car\ reduced}$ to the tail car, which has the advantage of keeping the actual total braking force of the train to reach the total braking force target of the train and ensuring the braking distance. In a case where the braking force of the head car is reduced, the electric braking force of the head car should be reduced first, and if it is insufficient, the air braking force of the head car should be further reduced.

In the implementation, after the step of allocating the reduced air braking force of the head car $F_{head\ car\ reduced}$ to the tail car by the train braking system, further comprising the steps of:

in a case where $\lambda_{tail\ car\ actual}$ increased to $\lambda_{max}$ , acquiring $N_{tail\ car\ actual\ adhesion\ max}$, wherein $\lambda_{tail\ car\ actual}$ is an actual adhesion coefficient of the tail car, $N_{tail\ car\ adhesion\ max}$ is a maximum value of an actual total adhesion force applied by the tail car in a case where $\lambda_{tail\ car\ actual} = \lambda_{max}$, and $F_{tail\ car\ actual\ adhesion\ max} = \lambda_{max} \times M_{head\ car} \times g$; evenly allocating an anti-coasting primary air braking force $K_{anti\text{-}coasting\ primary}$ to the intermediate car by the train braking system, wherein $K_{anti\text{-}coasting\ primary} = Z_{total\ braking\ force\ target} - h_{ead\ car\ anti\text{-}coasting} - N_{tail\ car\ actual\ adhesion\ max} - N_{intermediate\ actual\ adhesion}$ , wherein $N_{intermediate\ actual}\ adhesion$ is to the actual total adhesion force applied by the intermediate car corresponding to the actual adhesion coefficient of the intermediate car.

In this way, the actual total braking force of the train is kept to reach the total braking force target of the train. In this way, the braking distance of the train can be guaranteed. In a case where the head car and the tail car are motor cars, the remaining air braking force is reallocated to the intermediate car after the electric braking force is preferentially applied. In the first case, generally speaking, the adhesion coefficient of the intermediate car will not reach the maximum value. At this time, after the head car coasting and the adhesion coefficient of the tail car reaches the predetermined maximum value of adhesion coefficient, it can be calculated according to the above formula. In the second case, if the intermediate car directly reaches the predetermined maximum adhesion coefficient at this time, the remaining air braking force is allocated to the head car and the tail car. If the head car coasting at this time, only the reduced braking force of the head car can be added to the tail car until the tail car reaches the maximum adhesion coefficient. If the maximum adhesion coefficient of the tail car is exceeded, it will not be allocated to the intermediate car, and only the total braking force of the whole car will be partially reduced.

In the implementation, in a case where the head car and the tail car are motor cars, further comprising the steps of:

in a case where a traction system of the intermediate car detects an electric braking coasting of the intermediate motor car, calculating an electric braking force of the coasting intermediate motor car $H_{coasting\ intermediate\ motor\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ motor\ car}$ is the mass of the coasting motor car; allocating the electric braking force valued at $H_{coasting\ intermediate\ motor\ car}$ to each motor cars by the train traction system, and allocating the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ motor\ car}$, so that the adhesion demand of all cars are same.

In a case where the intermediate motor car occurs coasting, the electric braking force $H_{coasting\ intermediate\ motor\ car}$ allocated for the intermediate motor car is matched with the adhesion coefficient demand of the coasting intermediate motor car, so that the adhesion demand of all cars are same.

In the implementation, the braking force allocating method further includes the following steps:

in a case where during the head car applying the air braking force having coasting and allocating the braking force according to the corresponding steps, the coasting intermediate motor car is detected, allocating the braking force according to the corresponding steps of the head car applying the air braking force having coasting;

in a case where during the intermediate motor car has coasting and allocating the braking force according to the corresponding steps, the head car applying the air braking force having coasting is detected, firstly allocating the braking force according to the corresponding steps of the intermediate motor car having coasting, and then allocating the braking force according to the corresponding steps of the head car applying the air braking force having coasting.

Embodiment 4

The present disclosure provides a braking force allocating device for a metro train including:

an acquiring module, configured to acquire a total braking force target of a train and the total electric braking capacity provided by all motor cars of the train, wherein the total braking force target is calculated by a train braking system, and the total electric braking capacity is calculated by a train traction system;

a primary air braking force allocating module, configured to, in a case where the total electric braking capacity is less than the total braking force target, allocate the total electric braking capacity to all motor cars, and evenly allocate a primary air braking force to the intermediate car by the train braking system, wherein the primary air braking force is equal to a difference between the total braking force target and the total electric braking capacity.

In the implementation, the braking force allocating device further includes:

a secondary air braking force allocating module, configured to, in a case where an actual total braking force of the train does not reach the total braking force target of the train, evenly allocate a secondary air braking force to an end car, wherein the secondary air braking force is equal to the difference between the total braking force target and the actual total braking force.

In the implementation, the braking force allocating device further includes:

an eliminating coasting module, configured to, in a case where a coasting car of the metro trains is detected, reduce the braking force of the coasting car to eliminate coasting, and allocate the braking force to other cars according to a predetermined braking force allocation rule during coasting, so as to keep the actual total braking force of the train reaching the total braking force target of the train.

In a case where the head car and the tail car are trailers:

In the implementation, the braking force allocating device further includes:

The secondary air braking force allocating module further includes:

an actual total braking force acquiring first sub-module, configured to, in a case where a head car and a tail car are trailers, in a case where $\lambda_{intermediate\ actual}$ increasing to $\lambda_{max}$, acquire $N_{intermediate\ total\ adhesion\ max}$, wherein $N_{intermediate\ total\ adhesion\ max}$ is a maximum value of the actual total adhesion of the intermediate car while $\lambda_{intermediate\ actual}$ is equal to $\lambda_{max}$, wherein $\lambda_{intermediate\ actual}$ is an actual adhesion coefficient of the intermediate car, $\lambda_{max}$ is a predetermined maximum adhesion coefficient, and the actual total braking force of the train is equal to $N_{intermediate\ total\ adhesion\ max}$;

a secondary air braking force allocating first sub-module, configured to, in a case where $N_{intermediate\ total\ adhesion\ max} < Z_{total\ braking\ force\ target}$, evenly allocate the secondary air braking force $K_{secondary}$ to the head car and the tail car, wherein $K_{secondary} = Z_{total\ braking\ force\ target} - N_{intermediate\ total\ adhesion\ max}$, and $Z_{total\ braking\ force\ target}$ is the total braking force target of the train.

In the implementation, the elimination coasting module includes:

a coasting head car allocating first sub-module, configured to, wherein in a case where the head car and the tail car are motor cars, in a case where the head car braking system detects that the head car applying an air braking force has air braking coasting, reduce the air braking force applied by the head car to an anti-coasting air braking force of the head car $K_{head\ car\ anti-coasting}$ by the head car braking system; wherein $K_{head\ car\ anti-coasting} = \lambda_{anti-coasting} \times M_{head\ car} \times g$, $\lambda_{anti-coasting}$ is the predetermined adhesion anti-coasting value of the train, $M_{head\ car}$ is the mass of the head car, and $g$ is the acceleration of gravity;

a tail car allocating first sub-module, configured to, allocate the reduced air braking force of the head car $F_{head\ car\ reduced}$ to the tail car by the train braking system, wherein

$$F_{head\ car\ reduced} = \frac{K_{secondary}}{2} - K_{head\ car\ anti-coasting}.$$

In the implementation, the elimination coasting module further includes:

a tail car adhesion force acquiring first sub-module, configured to, in a case where $\lambda_{tail\ car\ actual}$ increased to $\lambda_{max}$, acquire $N_{tail\ car\ adhesion\ max}$, wherein $N_{tail\ car\ adhesion\ max}$ is a maximum value of an actual total adhesion force applied by the tail car while $\lambda_{tail\ car\ actual}$ is equal to $\lambda_{max}$, $\lambda_{tail\ car\ actual}$ is an actual adhesion coefficient of the tail car, and $F_{tail\ car\ adhesion\ max} = \lambda_{adhesion\ max} \times M_{head\ car} \times g$;

an anti-coasting primary allocating first sub-module, configured to, evenly allocate an anti-coasting primary air braking force $K_{anti\text{-}coasting\ primary}$ to the intermediate car by the train braking system, wherein $K_{anti\text{-}coasting\ primary} = Z_{total\ braking\ force\ target} - D_{total\ electric\ braking\ capacity} - K_{head\ car\ anti\text{-}coasting\ air\ braking\ force} - N_{tail\ car\ adhesion\ max}$.

In the implementation, the eliminating coasting module further includes:

an intermediate car allocating first sub-module, configured to, in a case where a traction system of the intermediate car detects an electric braking coasting of the intermediate motor car, calculate an electric braking force of the coasting intermediate motor car $H_{coasting\ intermediate\ motor\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ motor\ car}$ is the mass of the coasting motor car;

an each car allocating first sub-module, configured to, allocate the electric braking force valued at $H_{coasting\ intermediate\ motor\ car}$ to each motor cars by the train traction system, and allocate the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ motor\ car}$, so that the adhesion demand of all cars are same.

In a case where the head car and the tail car are motor cars:
In implementation, the secondary air braking force allocating module further includes:

an actual total adhesion force acquiring second sub-module, configured to, in a case where $\lambda_{intermediate\ actual}$ increased to $\lambda_{max}$, acquire $T_{end\ car\ actual\ electric\ braking} + N_{intermediate\ adhesion\ max}$, wherein $\lambda_{intermediate\ actual}$ is an actual adhesion coefficient, $\lambda_{max}$ is the predetermined maximum adhesion coefficient, $T_{end\ car\ actual\ electric\ braking}$ is the actual electric braking force applied by the end car and $N_{intermediate\ adhesion\ max}$ is the maximum actual total adhesion force applied by the intermediate car in a case where $\lambda_{intermediate\ actual}$ is equal to $\lambda_{max}$,

a secondary air braking force allocating second sub-module, configured to, in a case where $T_{end\ car\ actual\ electric\ braking} + N_{intermediate\ adhesion\ max} < Z_{total\ braking\ force\ target}$, evenly allocate the secondary air braking force $K_{secondary}$ to the head car and the tail car, wherein $K_{secondary} = Z_{total\ braking\ force\ target} - N_{intermediate\ adhesion\ max} - T_{end\ car\ actual\ electric\ braking}$.

In implementation, the elimination coasting module includes:

a coasting head car allocating second sub-module, configured to, in a case where the head car and the tail car are motor cars and in a case where the head car traction system detects an electric braking coasting of the head car, reduce the electric braking force of the head car to an anti-coasting braking force of the head car $K_{head\ car\ anti\text{-}coasting}$ by the head car traction system; wherein $K_{head\ car\ anti\text{-}coasting} = \lambda_{anti\text{-}coasting} \times M_{head\ car} \times g$, $\lambda_{anti\text{-}coasting}$ is the predetermined adhesion anti-coasting value of the train, $M_{head\ car}$ is the mass of the head car, and $g$ is the acceleration of gravity;

a tail car allocating second sub-module, configured to, allocate the reduced air braking force of the head car $F_{head\ car\ reduced}$ to the tail car.

In the implementation, the elimination coasting module further includes:

a tail car adhesion force acquiring second sub-module, configured to, in a case where $\lambda_{tail\ car\ actual}$ increased to $\lambda_{max}$, acquire $N_{tail\ car\ actual\ adhesion\ max}$, wherein $\lambda_{tail\ car\ actual}$ is an actual adhesion coefficient of the tail car, $N_{tail\ car\ adhesion\ max}$ is a maximum value of an actual total adhesion force applied by the tail car in case where $\lambda_{tail\ car\ actual} - \lambda_{max}$, and $N_{tail\ car\ actual\ adhesion\ max} = \lambda_{max} \times M_{head\ car} \times g$;

an anti-coasting primary allocating second sub-module, configured to, evenly allocate an anti-coasting primary air braking force $K_{anti\text{-}coasting\ primary}$ to the intermediate car, wherein $K_{anti\text{-}coasting\ primary} = Z_{total\ braking\ force\ target} -* -N_{head\ car\ anti\text{-}coasting\ air\ braking} - N_{tail\ car\ actual\ adhesion\ max}$.

In the implementation, the elimination coasting module further includes:

an intermediate car allocating second sub-module, configured to, in a case where a traction system of the intermediate car detects an electric braking coasting of the intermediate motor car, calculate an electric braking force of the coasting intermediate motor car $H_{coasting\ intermediate\ motor\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ motor\ car}$ is the mass of the coasting motor car;

an each car allocating second sub-module, configured to, allocate the electric braking force valued at $H_{coasting\ intermediate\ motor\ car}$ to each motor cars by the train traction system, and allocating the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ motor\ car}$, so that the adhesion demand of all cars are same.

Embodiment5

The present disclosure provides a braking force allocating system for a metro train including:

one or more processors;
a storage device for storing one or more programs;
in a case where the one or more programs are executed by the one or more processors, the one or more processors implement the braking force allocating method as above.

In the description of the present disclosure and its embodiments, It should be understood that, The terms "top", "bottom", "height" and the like denote an orientation or positional relationship based on those shown in the drawings and are intended for ease of description and simplification of the description only, and are not intended to indicate or imply that the device or element in question must have a particular orientation, be constructed and operate in a particular orientation and therefore cannot be construed as limiting to the present disclosure.

In the present disclosure and embodiments thereof, the terms "arranged", "mounted", "connected", "connected", "fixed", etc. are to be understood in a broad sense and may be, for example, a fixed connection, a detachable connection, or integrated, unless otherwise expressly specified and limited; It can be mechanical connection, electrical connection or communication; It can be directly connected or indirectly connected by intermediate media, and it can be the internal communication of two elements or the interaction between two elements. The specific meanings of the above terms in the present disclosure may be understood on a case-by-case basis to those of ordinary skill in the art.

In the present disclosure and its embodiments, the first feature "above" or "below" the second feature may include direct contact of the first and second features, or may include contact of the first and second features not directly but through additional features between them, unless otherwise expressly specified and defined. Also, the first feature is "above" the second feature, and "above" and "upper" include the first feature being directly above and obliquely above the second feature, or simply indicating that the first feature is horizontally higher than the second feature. The first feature "below", "low" and "bottom" of the second feature includes the first feature directly above and obliquely above the second feature, or simply indicates that the horizontal height of the first feature is less than that of the second feature.

The above disclosure provides many different embodiments or examples for implementing different constructions of the present disclosure. In order to simplify the disclosure of the present disclosure, the components and arrangements of specific examples are described above. Of course, they are only by way of example and are not intended to limit the present disclosure. Further, the present disclosure may repeat reference numbers and/or reference letters in different examples for the purposes of simplicity and clarity and does not per se indicate the relationship between the various embodiments and/or arrangements discussed. In addition examples of various specific processes and materials are provided herein but those of ordinary skill in the art will be aware of the present disclosure of other processes and/or the use of other materials.

Although the preferred embodiments of the present disclosure have been described additional changes and modifications may be made to these embodiments once the basic inventive concepts are known to those skilled in the art. Therefore the appended claims are intended to be interpreted to encompass preferred embodiments as well as all modifications and modifications falling within the scope of the present disclosure.

Apparently those skilled in the art may make various modifications and modifications to the present disclosure without departing from the spirit and scope of the present disclosure. Thus the present disclosure is intended to include such modifications and variations provided that they fall within the scope of the claims and their equivalents.

**Claims**

1. A braking force allocating method for a metro train, comprising the steps of:

    acquiring a total braking force target of a train and the total electric braking capacity provided by all motor cars of the train, wherein the total braking force target is calculated by a train braking system, and the total electric braking capacity is calculated by a train traction system;
    in case where the total electric braking capacity is less than the total braking force target, allocating the total electric braking capacity to all motor cars by the train braking system, and evenly allocating a primary air braking force to the intermediate car by the train braking system, wherein the primary air braking force is equal to a difference between the total braking force target and the total electric braking capacity.

2. The braking force allocating method according to claim 1, further comprising the steps of:
    in case where an actual total braking force of the train not reach the total braking force target of the train, evenly allocating a secondary air braking force to an end car by the train braking system, wherein the secondary air braking force is equal to difference between the total braking force target and the actual total braking force.

3. The braking force allocating method according to claim 2, further comprising the steps of:
    in case where a coasting car of the metro trains is detected, reducing the braking force of the coasting car to eliminate coasting, and allocating the braking force to other cars according to a predetermined braking force allocation rule during coasting, so as to keep the actual total braking force of the train reaching the total braking force target of the train.

4. The braking force allocating method according to claim 3, wherein in case where a head car and a tail car are trailers, and the actual total braking force of the train not reach the total braking force target of the train, evenly allocating the secondary air braking force to the end car, further includes:

    in case where $\lambda_{intermediate\ actual}$ increasing to $\lambda_{max}$, acquiring $N_{intermediate\ total\ adhesion\ max}$, wherein $N_{intermediate\ total\ adhesion\ max}$ is a maximum value of the actual total adhesion of the intermediate car while $\lambda_{intermediate\ actual}$ is equal to $\lambda_{max}$, wherein $\lambda_{intermediate\ actual}$ is an actual adhesion coefficient of the intermediate car, $\lambda_{max}$ is a predetermined maximum adhesion coefficient, and the actual total braking force of the train is equal to $N_{intermediate\ total\ adhesion\ max}$;
    in case where $N_{intermediate\ total\ adhesion\ max} < Z_{total\ braking\ force\ target}$, evenly allocating the secondary air braking force $K_{secondary}$ to the head car and the tail car, wherein $K_{secondary} = Z_{total\ braking\ force\ target} - N_{intermediate\ total\ adhesion\ max}$, and $Z_{total\ braking\ force\ target}$ is the total braking force target of the train.

5. The braking force allocating method according to claim 4, wherein in case where the head car and the tail car are trailers, and the coasting car of the metro train is detected, reducing the braking force of the coasting car to eliminate coasting, and allocating the braking force to other cars according to a predetermined braking force allocation rule during coasting, so as to keep the actual total braking force of the train reaching the total braking force target of the train further includes the steps of:

    in case where the head car braking system detects that the head car applying an air braking force has air braking coasting, reducing the air braking force applied by the head car to an anti-coasting air braking force of the head car $K_{head\ car\ anti-coasting}$ by the head car braking system; wherein $K_{head\ car\ anti-coasting} = \lambda_{anti-coasting} \times M_{head\ car} \times g$, $\lambda_{anti-coasting}$ is the predetermined adhesion anti-coasting value of the train, $M_{head\ car}$ is the mass of the head car, and $g$ is the acceleration of gravity;
    allocating the reduced air braking force of the head car $F_{head\ car\ reduced}$ to the tail car by the train braking system, wherein $$F_{head\ car\ reduced} = \frac{K_{secondary}}{2} - K_{head\ car\ anti-coasting}.$$

6. The braking force allocating method according to claim 5, after the step of allocating the reduced air braking force of the head car $F_{head\ car\ reduced}$ to the tail car by the train braking system, further comprising the steps of:

    in case where $\lambda_{tail\ car\ actual}$ increased to $\lambda_{max}$, acquiring $N_{tail\ car\ adhesion\ max}$, wherein $N_{tail\ car\ adhesion\ max}$ is a maximum value of an actual total adhesion force applied by the tail car in case where $\lambda_{tail\ car\ actual} = \lambda_{max}$, $\lambda_{tail\ car\ actual}$ is an actual adhesion coefficient of the tail car, and $F_{tail\ car\ adhesion\ max} = \lambda_{adhesion\ max} \times M_{head\ car} \times g$;

evenly allocating an anti-coasting primary air braking force $K_{anti\text{-}coasting\ primary}$ to the intermediate car by the train braking system, wherein $K_{anti\text{-}coasting\ primary}$ = $Z_{total\ braking\ force\ target}$ - $D_{total\ electric\ braking\ capacity}$ $-K_{head\ car\ anti\text{-}coasting\ air\ braking\ force}$ - $N_{tail\ car\ adhesion\ max}$.

7. The braking force allocating method according to claim 6, further comprising the steps of:

in case where a traction system of the intermediate car detects an electric braking coasting of the intermediate motor car, calculating an electric braking force of the coasting intermediate motor car $H_{coasting\ intermediate\ motor\ car}$ = $\lambda_{intermediate\ coasting}$ × $M_{coasting\ intermediate\ motor\ car}$ × $g$ by a train network system to send to the train traction system and the train braking system; wherein $\lambda_{intermediate\ coasting}$ is the adhesion coefficient demand of the coasting intermediate motor car and $M_{coasting\ motor\ car}$ is the mass of the coasting motor car;
allocating the electric braking force valued at $H_{coasting\ intermediate\ motor\ car}$ to each motor cars by the train traction system, and allocating the air braking force $K_{intermediate\ air\ braking\ force}$ to all cars in a manner of equivalence adhesion braking force allocation by the train braking system, wherein $K_{intermediate\ air\ braking\ force}$ = $Z_{total\ braking\ force\ target}$ - $n$ × $H_{coasting\ intermediate\ motor\ car}$, so that the adhesion demand of all cars are same.

8. The braking force allocating method according to claim 7, further comprising the steps of:

in case where during the head car applying the air braking force having coasting and allocating the braking force according to the corresponding steps, the coasting intermediate motor car is detected, allocating the braking force according to the corresponding steps of the head car applying the air braking force having coasting;
in case where during the intermediate motor car having coasting and allocating the braking force according to the corresponding steps, the head car applying the air braking force having coasting is detected, firstly allocating the braking force according to the corresponding steps of the intermediate motor car having coasting, and then allocating the braking force according to the corresponding steps of the head car applying the air braking force having coasting.

9. The braking force allocating method according to claim 3, wherein in case where the head car and the tail car are trailers, and the actual total braking force of the train not reach the total braking force target of the train, evenly allocating the secondary air braking force to the end car, further includes:

in case where $\lambda_{intermediate\ actual}$ increased to $\lambda_{max}$, acquiring $T_{end}$ car actual electric braking + $N_{intermediate\ adhesion\ max}$, wherein $\lambda_{intermediate}$ actual is an actual adhesion coefficient, $\lambda_{max}$ is the predetermined maximum adhesion coefficient, $T_{end\ car\ actual\ electric\ braking}$ is the actual electric braking force applied by the end car and $N_{intermediate\ adhesion\ max}$ is the maximum actual total adhesion force applied by the intermediate car in case where $\lambda_{intermediate\ actual}$ is equal to $\lambda_{max}$;
in case where $T_{end\ car\ actual\ electric\ braking}$ + $N_{intermediate\ adhesion\ max}$ < $Z_{total\ braking\ force\ target}$, evenly allocating the secondary air braking force $K_{secondary}$ to the head car and the tail car, wherein $K_{secondary}$ = $Z_{total\ braking\ force\ target}$ $-N_{intermediate\ adhesion\ max}$ - $T_{end\ car\ actual\ electric\ braking}$.

10. The braking force allocating method according to claim 9, wherein in case where the head car and the tail car are trailers, and the coasting car of the metro train is detected, reducing the braking force of the coasting car to eliminate coasting, and allocating the braking force to other cars according to the predetermined braking force allocation rule during coasting, so as to keep the actual total braking force of the train reaching the total braking force target of the train further includes the steps of:

in case where the head car traction system detects an electric braking coasting of the head car, reducing the electric braking force of the head car to an anti-coasting braking force of the head car $K_{head\ car\ anti\text{-}coasting}$ by the head car traction system; wherein $K_{head\ car\ anti\text{-}coasting}$ = $\lambda_{anti\text{-}coasting}$ × $M_{head\ car}$ × $g$, $\lambda_{anti\text{-}coasting}$ is the predetermined adhesion anti-coasting value of the train, $M_{head\ car}$ is the mass of the head car, and $g$ is the acceleration of gravity;
allocating the reduced air braking force of the head car $F_{head\ car\ reduced}$ to the tail car by the train braking system,

$$F_{head\ car\ reduced} = \frac{K_{secondary}}{2} - K_{head\ car\ anti-coasting}.$$

wherein

11. The braking force allocating method according to claim 10, after the step of allocating the reduced air braking force of the head car $F_{head\ car\ reduced}$ to the tail car by the train braking system, further comprising the steps of:

in case where $\lambda_{tail\ car\ actual}$ increased to $\lambda_{max}$, acquiring $N_{tail\ car\ actual\ adhesion\ max}$, wherein $\lambda_{tail\ car\ actual}$ is an actual adhesion coefficient of the tail car, $N_{tail\ car\ adhesion\ max}$ is a maximum value of an actual total adhesion force applied by the tail car in case where $\lambda_{tail\ car\ actual} = \lambda_{max}$, and $F_{tail\ car\ actual\ adhesion\ max} = \lambda_{max} \times M_{head\ car} \times g$; evenly allocating an anti-coasting primary air braking force $K_{anti\text{-}coasting\ primary}$ to the intermediate car by the train braking system, wherein $K_{anti\text{-}coasting\ primary} = Z_{total\ braking\ force\ target} - K_{head\ car\ anti\text{-}coasting} - N_{tail\ car\ actual\ adhesion\ max} - N_{intermediate\ actual\ adhesion}$, wherein $N_{intermediate\ actual\ adhesion}$ is to the actual total adhesion force applied by the intermediate car corresponding to the actual adhesion coefficient of the intermediate car.

**12.** The braking force allocating method according to claim 11, in case where the head car and the tail car are motor cars, further comprising the steps of:

in case where a traction system of the intermediate car detects an electric braking coasting of the intermediate motor car, calculating an electric braking force of the coasting intermediate motor car $H_{coasting\ intermediate\ motor\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ motor\ car}$ is the mass of the coasting motor car;

allocating the electric braking force valued at $H_{coasting\ intermediate\ motor\ car}$ to each motor cars by the train traction system, and allocating the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ motor\ car}$, so that the adhesion demand of all cars are same.

**13.** The braking force allocating method according to claim 12, further comprising the steps of:

in case where during the head car applying the air braking force having coasting and allocating the braking force according to the corresponding steps, the coasting intermediate motor car is detected, allocating the braking force according to the corresponding steps of the head car applying the air braking force having coasting; in case where during the intermediate motor car having coasting and allocating the braking force according to the corresponding steps, the head car applying the air braking force having coasting is detected, firstly allocating the braking force according to the corresponding steps of the intermediate motor car having coasting, and then allocating the braking force according to the corresponding steps of the head car applying the air braking force having coasting.

**14.** A braking force allocating device for a metro train, comprising:

an acquiring module, configured to acquire a total braking force target of a train and the total electric braking capacity provided by all motor cars of the train, wherein the total braking force target is calculated by a train braking system, and the total electric braking capacity is calculated; a primary air braking force allocating module, configured to, in case where the total electric braking capacity is less than the total braking force target, allocate the total electric braking capacity to all motor cars, and evenly allocate a primary air braking force to the intermediate car, wherein the primary air braking force is equal to a difference between the total braking force target and the total electric braking capacity.

**15.** The braking force allocating device according to claim 14, comprising:
a secondary air braking force allocating module, configured to, in case where an actual total braking force of the train not reach the total braking force target of the train, evenly allocate a secondary air braking force to an end car, wherein the secondary air braking force is equal to difference between the total braking force target and the actual total braking force.

**16.** The braking force allocating device according to claim 15, comprising:
an eliminating coasting module, configured to, in case where a coasting car of the metro trains is detected, reduce the braking force of the coasting car to eliminate coasting, and allocating the braking force to other cars according to a predetermined braking force allocation rule during coasting, so as to keep the actual total braking force of the train reaching the total braking force target of the train.

**17.** The braking force allocating device according to claim 16, wherein the secondary air braking force allocating module further includes:

an actual total braking force acquiring first sub-module, configured to, in case where a head car and a tail car are trailers, in case where $\lambda_{intermediate\ actual}$ increasing to $\lambda_{max}$, acquire $N_{intermediate\ total\ adhesion\ max}$, wherein $N_{intermediate\ total\ adhesion\ max}$ is a maximum value of the actual total adhesion of the intermediate car while $\lambda_{intermediate\ actual}$ is equal to $\lambda_{max}$, wherein $\lambda_{intermediate\ actual}$ is an actual adhesion coefficient of the intermediate car, $\lambda_{max}$ is a predetermined maximum adhesion coefficient, and the actual total braking force of the train is equal to $N_{intermediate\ total\ adhesion\ max}$;

a secondary air braking force allocating first sub-module, configured to, in case where $N_{intermediate\ total\ adhesion\ max}$ < $Z_{total\ braking\ force\ target}$, evenly allocate the secondary air braking force $K_{secondary}$ to the head car and the tail car, wherein $K_{secondary} = Z_{total\ braking\ force\ target} - N_{intermediate\ total\ adhesion\ max}$, and $Z_{total\ braking\ force\ target}$ is the total braking force target of the train.

18. The braking force allocating device according to claim 17, wherein the eliminating coasting module further includes:

a coasting head car allocating first sub-module, configured to, wherein in case where the head car and the tail car are motor cars, in case where the head car braking system detects that the head car applying an air braking force has air braking coasting, reduce the air braking force applied by the head car to an anti-coasting air braking force of the head car $K_{head\ car\ anti-coasting}$ by the head car braking system; wherein $K_{head\ car\ anti-coasting} = \lambda_{anti-coasting} \times M_{head\ car} \times g$, $\lambda_{anti-coasting}$ is the predetermined adhesion anti-coasting value of the train, $M_{head\ car}$ is the mass of the head car, and $g$ is the acceleration of gravity;

a tail car allocating first sub-module, configured to, allocate the reduced air braking force of the head car $F_{head\ car\ reduced}$ to the tail car by the train braking system, wherein

$$F_{head\ car\ reduced} = \frac{K_{secondary}}{2} - K_{head\ car\ anti-coasting}.$$

19. The braking force allocating device according to claim 18, wherein the eliminating coasting module further includes:

a tail car adhesion force acquiring first sub-module, configured to, in case where $\lambda_{tail\ car\ actual}$ increased to $\lambda_{max}$, acquire $N_{tail\ car\ adhesion\ max}$, wherein $N_{tail\ car\ adhesion\ max}$ is a maximum value of an actual total adhesion force applied by the tail car, $\lambda_{tail\ car\ actual}$ is an actual adhesion coefficient of the tail car, and $F_{tail\ car\ adhesion\ max} = \lambda_{adhesion\ max} \times M_{head\ car} \times g$;

an anti-coasting primary allocating first sub-module, configured to, evenly allocate an anti-coasting primary air braking force $K_{anti-coasting\ primary}$ to the intermediate car by the train braking system, wherein $K_{anti-coasting\ primary} = Z_{total\ braking\ force\ target} - D_{total\ electric\ braking\ capacity} - K_{head\ car\ anti-coasting\ air\ braking\ force} - N_{tail\ car\ adhesion\ max}$.

20. The braking force allocating device according to claim 19, wherein the eliminating coasting module further includes:

an intermediate car allocating first sub-module, configured to, in case where a traction system of the intermediate car detects an electric braking coasting of the intermediate motor car, calculate an electric braking force of the coasting intermediate motor car $H_{coasting\ intermediate\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ intermediate\ car}$ is the mass of the coasting car;

an each car allocating first sub-module, configured to, allocate the electric braking force valued at $H_{coasting\ intermediate\ car}$ to each motor cars by the train traction system, and allocate the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ car}$, so that the adhesion demand of all cars are same.

21. The braking force allocating device according to claim 16, wherein the secondary air braking force allocating module further includes:

an actual total adhesion force acquiring second sub-module, configured to, in case where $\lambda_{intermediate\ actual}$ increased to $\lambda_{max}$, acquire $T_{end\ car\ actual\ electric\ braking} + N_{intermediate\ adhesion\ max}$, wherein $\lambda_{intermediate\ actual}$ is an actual adhesion coefficient, $\lambda_{max}$ is the predetermined maximum adhesion coefficient, $T_{end\ car\ actual\ electric\ braking}$ is the actual electric braking force applied by the end car and $N_{intermediate\ adhesion\ max}$ is the maximum actual total adhesion force applied by the intermediate car in case where $\lambda_{intermediate\ actual}$ is equal to $\lambda_{max}$;

a secondary air braking force allocating second sub-module, configured to, in case where $T_{end\ car\ actual\ electric\ braking} + N_{intermediate\ adhesion\ max}$ < $Z_{total\ braking\ force\ target}$, evenly allocate the secondary air braking force $K_{secondary}$ to the head car and the tail car, wherein $K_{secondary} = Z_{total\ braking\ force\ target} - N_{intermediate\ adhesion\ max} - T_{end\ car\ actual\ electric\ braking}$.

22. The braking force allocating device according to claim 21, wherein the eliminating coasting module further includes:

a coasting head car allocating second sub-module, configured to, in case where the head car and the tail car are motor cars and in case where the head car traction system detects an electric braking coasting of the head car, reduce the electric braking force of the head car to an anti-coasting braking force of the head car $K_{head\ car\ anti-coasting}$ by the head car traction system; wherein $K_{head\ car\ anti-coasting} = \lambda_{anti-coasting} \times M_{head\ car} \times g$, $\lambda_{anti-coasting}$ is the predetermined adhesion anti-coasting value of the train, $M_{head\ car}$ is the mass of the head car, and $g$ is the acceleration of gravity;
a tail car allocating second sub-module, configured to, allocate the reduced air braking force of the head car $F_{head\ car\ reduced}$ to the tail car.

23. The braking force allocating device according to claim 22, wherein the eliminating coasting module further includes:

a tail car adhesion force acquiring second sub-module, configured to, in case where $\lambda_{tail\ car\ actual}$ increased to $\lambda_{max}$, acquire $N_{tail\ car\ actual\ adhesion\ max}$, wherein $\lambda_{tail\ car\ actual}$ is an actual adhesion coefficient of the tail car, $N_{tail\ car\ adhesion\ max}$ is a maximum value of an actual total adhesion force applied by the tail car in case where $\lambda_{tail\ car\ actual} = \lambda_{max}$, and $F_{tail\ car\ actual\ adhesion\ max} = \lambda_{max} \times M_{head\ car} \times g$;
an anti-coasting primary allocating second sub-module, configured to, evenly allocate an anti-coasting primary air braking force $K_{anti-coasting\ primary}$ to the intermediate car, wherein $K_{anti-coasting\ primary} = Z_{total\ braking\ force\ target} - K_{head\ car\ anti-coasting} - N_{tail\ car\ actual\ adhesion\ max} - N_{intermediate\ actual\ adhesion}$.

24. The braking force allocating device according to claim 23, wherein the eliminating coasting module further includes:

an intermediate car allocating second sub-module, configured to, in case where a traction system of the intermediate car detects an electric braking coasting of the intermediate motor car, calculate an electric braking force of the coasting intermediate motor car $H_{coasting\ intermediate\ car} = \lambda_{intermediate\ coasting} \times M_{coasting\ intermediate\ motor\ car} \times g$ by a train network system to send to the train traction system and the train braking system; wherein $\lambda_{intermediate\ coasting}$ is the adhesion coefficient demand of the coasting intermediate motor car and $M_{coasting\ intermediate\ car}$ is the mass of the coasting car;
an each car allocating second sub-module, configured to, allocate the electric braking force valued at $H_{coasting\ intermediate\ car}$ to each motor cars by the train traction system, and allocating the air braking force $K_{intermediate\ air\ braking\ force}$ to all cars in a manner of equivalence adhesion braking force allocation by the train braking system, wherein $K_{intermediate\ air\ braking\ force} = Z_{total\ braking\ force\ target} - n \times H_{coasting\ intermediate\ car}$, so that the adhesion demand of all cars are same.

25. A braking force allocating system for a metro train, comprising:

one or more processors;
a storage device for storing one or more programs;
in case where the one or more programs are executed by the one or more processors, the one or more processors implement the braking force allocating method according to any one of claims 1 to 13.

acquiring a total braking force target of a train and the total electric braking capacity provided by of the train — S100

total electric braking capacity ≤ total braking force target

Y

N

S210 — allocating the total electric braking capacity to all motor cars by the train braking system, and evenly allocating a primary air braking force to the intermediate car by the train braking system

allocating the total braking force target to all motor cars by the train braking system — S220

actual total braking force reach the total braking force target or not

Not reach

reach

S310 — evenly allocating a secondary air braking force to an end car by the train braking system, wherein the secondary air braking force is equal to difference between the total braking force target and the actual total braking force

the total electric braking capacity is maintained for all motor cars, and the primary air braking force is maintained for the intermediate car — S320

FIG. 1

in case where the head car braking system detects that the head car applying an air braking force has air braking coasting, reducing the air braking force applied by the head car to an anti-coasting air braking force of the head car by the head car braking system

S510

allocating the reduced air braking force of the head car to the tail car by the train braking system

S520

$\lambda_{tail\ car\ actual}$ increased to $\lambda_{max}$

Y

N

S532

evenly allocating an anti-coasting primary air braking force to the intermediate car by the train braking system

S531

remaining the reduced air braking force of the head to be allocated to the tail car

FIG. 2

forward direction

| trailer | motor car | motor car | trailer |
|---|---|---|---|

1 2 3 4 5 6 7 8

FIG. 3

# EP 4 194 287 A1

## INTERNATIONAL SEARCH REPORT

| International application No. |
|---|
| **PCT/CN2020/126915** |

**A.    CLASSIFICATION OF SUBJECT MATTER**

B60T 8/17(2006.01)i;  B61H 11/00(2006.01)i

According to International Patent Classification (IPC) or to both national classification and IPC

**B.    FIELDS SEARCHED**

Minimum documentation searched (classification system followed by classification symbols)

B60T; B61H

Documentation searched other than minimum documentation to the extent that such documents are included in the fields searched

Electronic data base consulted during the international search (name of data base and, where practicable, search terms used)

CNPAT, CNKI, WPI, EPODOC; 电制动; 空气制动; 粘着, 黏着; 滑; 首车, 头车, 尾车, 端车, 中间车, 末车; electr+ 2w brak+; air 2w brak+, pneumatic+ 2w brak+; (lead+ or first or last or head or tail or front or rear) 3w (car? or train? or truck? or vehicle? or locomotive?); slip+; adher+, adhes+.

**C.    DOCUMENTS CONSIDERED TO BE RELEVANT**

| Category* | Citation of document, with indication, where appropriate, of the relevant passages | Relevant to claim No. |
|---|---|---|
| Y | CN 109094547 A (CRRC TANGSHAN CO., LTD.) 28 December 2018 (2018-12-28) description, paragraphs [0043]-[0104], figures 1-5 | 1-4, 9, 14-17, 21, 25 |
| Y | CN 102712259 A (MITSUBISHI ELECTRIC CORPORATION) 03 October 2012 (2012-10-03) description, paragraph [0085] | 1-4, 9, 14-17, 21, 25 |
| A | CN 109795518 A (CRRC TANGSHAN CO., LTD.) 24 May 2019 (2019-05-24) entire document | 1-25 |
| A | CN 107487308 A (CRRC TANGSHAN CO., LTD.) 19 December 2017 (2017-12-19) entire document | 1-25 |
| A | CN 106364333 A (CRRC NANJING PUZHEN HAITAI BRAKE EQUIPMENT CO., LTD.) 01 February 2017 (2017-02-01) entire document | 1-25 |
| A | WO 2013034692 A2 (KNORR-BREMSE SYSTEME FÜR NUTZFAHRZEUGE GMBH) 14 March 2013 (2013-03-14) entire document | 1-25 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 April 2021** | **28 April 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/126915**

| Patent document cited in search report | | | Publication date (day/month/year) | Patent family member(s) | | | Publication date (day/month/year) |
|---|---|---|---|---|---|---|---|
| CN | 109094547 | A | 28 December 2018 | None | | | |
| CN | 102712259 | A | 03 October 2012 | US | 2012296501 | A1 | 22 November 2012 |
| | | | | EP | 2527183 | B1 | 15 August 2018 |
| | | | | CN | 102712259 | B | 18 February 2015 |
| | | | | BR | 112012016899 | A2 | 05 June 2018 |
| | | | | EP | 2527183 | A1 | 28 November 2012 |
| | | | | JP | WO2011089703 | A1 | 20 May 2013 |
| | | | | JP | 4638959 | B1 | 23 February 2011 |
| | | | | WO | 2011089703 | A1 | 28 July 2011 |
| | | | | IN | 201207035 | P4 | 27 December 2013 |
| CN | 109795518 | A | 24 May 2019 | WO | 2019095699 | A1 | 23 May 2019 |
| | | | | EP | 3628563 | A1 | 01 April 2020 |
| | | | | US | 2020156604 | A1 | 21 May 2020 |
| CN | 107487308 | A | 19 December 2017 | CN | 107487308 | B | 12 November 2019 |
| CN | 106364333 | A | 01 February 2017 | CN | 106364333 | B | 11 December 2018 |
| WO | 2013034692 | A2 | 14 March 2013 | DE | 102011113120 | B4 | 19 March 2020 |
| | | | | DE | 102011113120 | A1 | 14 March 2013 |

Form PCT/ISA/210 (patent family annex) (January 2015)